Europäisches Patentamt

European Patent Office

Office européen des brevets

(11) Numéro de publication : **0 200 631**
**B1**

(12) **FASCICULE DE BREVET EUROPÉEN**

(45) Date de publication du fascicule du brevet :
**11.01.89**

(51) Int. Cl.⁴ : **A 01 D 46/28**, A 01 D 46/26

(21) Numéro de dépôt : **86400844.6**

(22) Date de dépôt : **18.04.86**

(54) **Procédé pour la récolte des fruits, baies et similaires, en particulier pour la récolte du raisin par grappes entières.**

(30) Priorité : **30.04.85 FR 8506544**

(43) Date de publication de la demande :
**05.11.86 Bulletin 86/45**

(45) Mention de la délivrance du brevet :
**11.01.89 Bulletin 89/02**

(84) Etats contractants désignés :
**DE GB IT**

(56) Documents cités :
**FR--A-- 2 213 003**
**FR--A-- 2 302 675**
**FR--A-- 2 417 248**

(73) Titulaire : **BRAUD, Société Anonyme**
**2 rue du Petit-Chaumineau BP 3027**
**F-49017 Angers Cedex (FR)**

**TECMACHINE, Société Anonyme**
**rue Benoît-Fourneyron Z.I. Sud**
**F-42166 Andrézieux-Bouthéon (FR)**

(72) Inventeur : **Deux, Alain**
**395 rue Saint Léonard**
**F-49000 Angers (FR)**
Inventeur : **Merant, Jean-Camille**
**Le Portail Meigné**
**F-49700 Doue La Fontaine (FR)**
Inventeur : **Gibert, François**

**F-42110 Civens (FR)**
Inventeur : **Berger, Antoine**
**Pommerol St. Victor-sur-Loire**
**F-42230 La Rochelle La Moliere (FR)**

(74) Mandataire : **Lefebure, Gérard et al**
**Office Blétry 2, boulevard de Strasbourg**
**F-75010 Paris (FR)**

## Description

La présente invention concerne un procédé pour la récolte de fruits, baies et similaires, en particulier pour la récolte du raisin par grappes entières, consistant à secouer la plante à l'aide d'organes secoueurs enserrant la plante et animés d'un mouvement de va-et-vient entre deux positions extrêmes de part et d'autre d'une position moyenne, en faisant subir aux organes secoueurs, au cours de leur déplacement au moins d'un côté de leur position moyenne, une succession de phases de mouvement au cours de l'une desquelles le gradient de vitesse atteint une valeur maximale.

Les machines de récolte travaillant selon ce procédé, et équipées d'organes secoueurs animés d'un mouvement de va-et-vient transversal par rapport à la direction d'avance de la machine sont maintenant bien connues. (FR-A-2 417 248). Dans les machines connues de ce type, les organes secoueurs agissent sur la plante en général dans sa zone fructifère, en pleine végétation et impriment à celle-ci un mouvement horizontal sinusoïdal ou pseudo-sinusoïdal d'une fréquence et d'une amplitude propres à détacher les fruits. Le mouvement est en général sinusoïdal au niveau des mécanismes de commande associés aux organes secoueurs, et pseudo-sinusoïdal au niveau de la plante en raison de la flexibilité de celle-ci et aussi, dans certains cas, de la flexibilité des organes secoueurs eux-mêmes. Dans tous les cas ce mouvement est sans aucune discontinuité, ni pendant le secouage d'une plante, ni pendant le déplacement de la machine d'une plante à la suivante. L'amplitude de mouvement (sans tenir compte de la flexibilité des organes secoueurs) est en général de l'ordre de 100 mm (entre 75 et 150 mm), et la fréquence de secouage est en général de l'ordre de 8 Hz (entre 6 et 10 Hz).

Bien que la vendange mécanique intégrale se développe aujourd'hui partout dans le monde pour des raisons économiques évidentes, quelques difficultés techniques subsistent encore et freinent son extension. En particulier, les machines à vendanger connues équipées d'organes secoueurs ayant un mouvement de va-et-vient transversal par rapport à la direction d'avance de la machine provoquent l'éclatement d'un nombre relativement important de grains de raisin et la récolte du raisin en grains individuels détachés des grappes de raisin. Ces deux phénomènes sont source de perte de jus, de difficultés de nettoyage du raisin dues au nombre et au mouillage des feuilles de vigne qui sont détachées en même temps que les raisins, de problèmes œnologiques dus au contact intime du jus dégagé avec l'air et les corps étrangers à la vendange, de difficultés de vinification dans certains cas particuliers (macération carbonique, pressurage fractionné). En outre, les organes secoueurs ont tendance à occasionner des dégâts à la plante, pouvant nuire à sa santé. En effet, ils ont tendance à provoquer un effeuillage, une casse des bois conduisant à des difficultés de taille, un ébourgeonnage pouvant compromettre le rendement futur de la plante, et des blessures au bois favorisant la pénétration de maladies.

En effet, les observations effectuées par les demanderesses à l'aide de caméras à prise de vue ultra-rapide montrent que le détachement des raisins se produit au bout d'un certain temps d'animation de la végétation, tout en provoquant une fatigue des organes de liaison qui relient chaque masse (grains de raisin, grappes, feuilles) au reste de la végétation. Il s'agit essentiellement d'une rupture par fatigue desdits organes de liaison. Au cours du temps nécessaire au détachement des raisins, les grappes fixées sur des rameaux ou sarments flexibles tournent autour de leur point de fixation en un mouvement aléatoire et les différents grains d'une même grappe se choquent entre eux. L'énergie accumulée par ces chocs provoque le détachement des grains des grappes. Il en résulte qu'avec les machines connues équipées d'organes secoueurs animés d'un mouvement sinusoïdal ou pseudo-sinusoïdal, environ 80 % de la récolte est constituée par des grains de raisin détachés des grappes et seulement environ 20 % de la récolte est constituée par des grappes entières. En se détachant des grappes, les grains libèrent du jus par ouverture de leur peau. En outre, l'action énergique des organes secoueurs dans la zone fructifère de la vigne provoque des chocs entre certaines grappes et les organes secoueurs, provoquant ainsi un éclatement des grains par écrasement et la libération d'une quantité importante de jus. En outre, cette même action énergique des organes secoueurs dans une partie de la végétation produit quelques dégâts sur elle : feuilles arrachées ou lacérées, casse de bois, arrachage ou blessures des bourgeons, blessures sur les bois.

En résumé, le secouage des vignes à l'aide d'organes secoueurs animés d'un mouvement sinusoïdal ou pseudo-sinusoïdal provoque essentiellement le détachement du raisin en grains individuels, beaucoup plus que par grappes entières, libère des quantités importantes de jus (choc contre les grappes, détachement des grains de raisin) et blesse la végétation (choc contre la végétation). Les observations qui précèdent sont également valables lorsque ces machines sont utilisées pour la récolte d'autres fruits ou baies comme par exemple les groseilles, les cassis et, dans une certaine mesure, les framboises.

Dans d'autres machines à vendanger connues (FR-A-2 213 003), les organes prévus pour détacher les raisins de la vigne sont constitués, non par des secoueurs, mais par deux séries de batteurs ou fouets en vis-à-vis, disposés de part et d'autre de la rangée de vignes. Chaque série de batteurs est animée d'un mouvement transversal de va-et-vient en opposition de phase par rapport à celui de l'autre série de batteurs, c'est-à-dire que l'une des deux séries de batteurs effectue son mouvement de va-et-vient pour venir frapper la vigne pendant que l'autre série de batteurs garde une position sensiblement fixe pour stopper la vigne battue par la première série, et vice-versa. Là aussi, du fait même de l'utilisation de « batteurs » ou « fouets », il y a encore inévitablement des chocs entre les batteurs ou fouets et les raisins ou la végétation de la vigne, causant la libération et la perte d'une quantité importante de jus et des dégâts sur la végétation.

La présente invention a donc principalement pour but de fournir un procédé de secouage permettant de récolter les fruits, baies et similaires en majorité par grappes entières et libérant une quantité de jus nettement moins importante que dans les machines antérieurement connues dont les organes secoueurs sont animés d'un mouvement sinusoïdal ou pseudo-sinusoïdal. L'invention a subsidiairement pour but de fournir un procédé de secouage pour la récolte des fruits, baies et similaires, qui provoque des dégâts moins importants sur les fruits récoltés et sur la végétation des plantes.

A cet effet, le procédé de la présente invention est caractérisé en ce que ladite succession de phases de mouvement comprend une phase de mouvement à grande vitesse, pendant laquelle la vitesse est sensiblement constante et au moins égale à 2 m/s, une phase de mouvement à vitesse quasiment nulle, qui correspond en pratique à un temps d'arrêt des organes secoueurs dans l'une des deux positions extrêmes et qui a une durée au moins égale à 30 ms, et, entre les deux phases précédentes, une phase intermédiaire de mouvement à gradient élevé de vitesse, dans laquelle le gradient de vitesse a ladite valeur maximale et est au moins égal à 200 m/s$^2$.

La phase intermédiaire à gradient élevé de vitesse peut être une phase de décélération succédant à la phase à grande vitesse, ou elle peut être une phase d'accélération précédant la phase à grande vitesse. De préférence, ladite succession de phases de mouvement comprend, dans l'ordre, une phase à grande vitesse, une phase de décélération à gradient élevé de vitesse, une phase à vitesse quasiment nulle dans ladite position extrême, une phase d'accélération à gradient élevé de la vitesse et une phase à grande vitesse. En outre, ladite succession de phases se produit de préférence des deux côtés de la position moyenne des organes secoueurs. Autrement dit, la loi de mouvement des organes secoueurs est symétrique par rapport à leur position moyenne. En outre, bien qu'il soit possible de faire agir les organes secoueurs sur la zone fructifère des plantes, on les fait de préférence agir uniquement sur les troncs des plantes. De la sorte, on évite que les organes secoueurs ne provoquent l'éclatement de certains fruits (perte de jus) ou des blessures à la végétation (feuilles arrachées ou lacérées, casse de bois, arrachage ou blessures des bourgeons, blessures sur les bois) par des chocs sur une partie des fruits et de la végétation.

Le procédé de la présente invention sera maintenant décrit en faisant référence aux dessins annexés sur lesquels :

La figure 1 montre des diagrammes temporels relatifs au mouvement des organes secoueurs dans le procédé de la présente invention.

La figure 2 montre schématiquement une vigne.

Les figures 3a à 3c sont des schémas permettant d'expliquer les phénomènes qui, dans le procédé de la présente invention, conduisent au détachement des raisins par grappes entières.

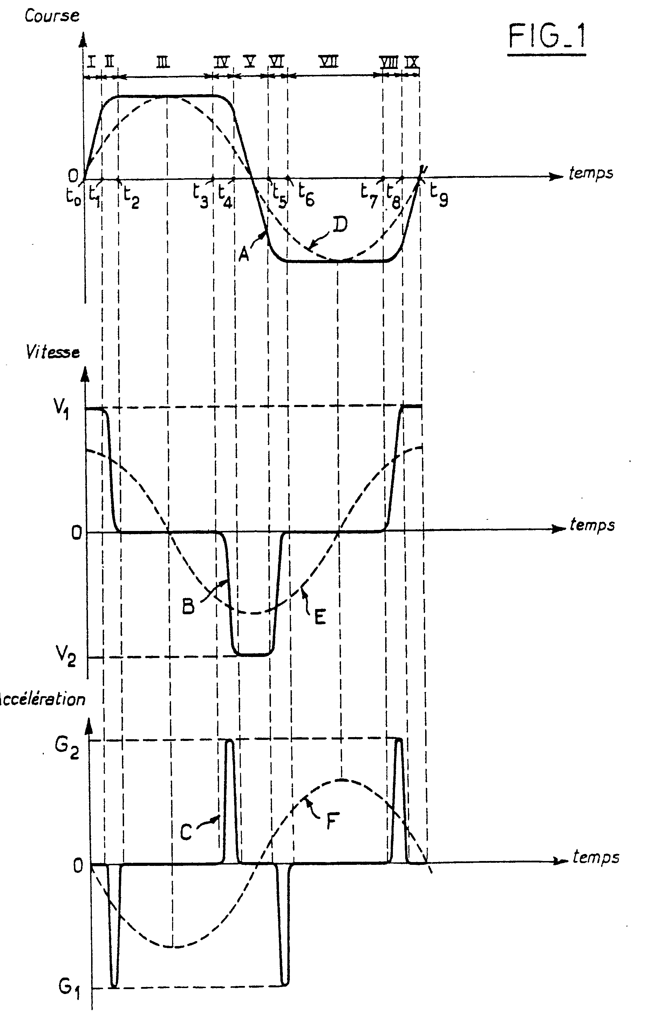

Dans la figure 1, les courbes A, B et C, en trait plein, représentent les diagrammes de la course, de la vitesse et de l'accélération, respectivement, des organes secoueurs au cours d'un cycle de va-et-vient dans le procédé de la présente invention. A titre de comparaison, on a également représenté dans la figure 1, en tiret, le diagramme D de la course, le diagramme E de la vitesse et le diagramme F de l'accélération des organes secoueurs au cours d'un cycle de va-et-vient dans les machines connues.

Comme montré dans la figure 1, partant de la position moyenne des organes secoueurs (instant $t_0$), dans le procédé de la présente invention le mouvement des organes secoueurs au cours de chaque cycle de va-et-vient comprend successivement une phase I à vitesse $V_1$ élevée et sensiblement constante jusqu'à l'instant $t_1$, puis une phase de décélération II à gradient élevé de vitesse $G_1$ jusqu'à l'instant $t_2$, puis une phase III à vitesse nulle ou quasiment nulle jusqu'à l'instant $t_3$, puis une phase d'accélération IV à gradient élevé de vitesse $G_2$ jusqu'à l'instant $t_4$, puis une phase V à vitesse $V_2$ élevée et sensiblement constante jusqu'à l'instant $t_5$, puis une phase de décélération VI à gradient élevé de vitesse $G_1$ jusqu'à l'instant $t_6$, puis une phase VII à vitesse nulle ou quasiment nulle jusqu'à l'instant $t_7$, puis une phase d'accélération VIII à gradient élevé de la vitesse $G_2$ jusqu'à l'instant $t_8$, puis une phase IX à vitesse $V_1$ élevée et sensiblement constante jusqu'à l'instant $t_9$. Après l'instant $t_9$, un nouveau cycle commence et se déroule d'une manière semblable à celle qui vient d'être décrite. Les vitesses $V_1$ et $V_2$ peuvent avoir la même valeur absolue ou des valeurs absolues différentes. De même, les gradients de vitesse $G_1$ et $G_2$ (décélération ou accélération) peuvent avoir la même valeur absolue ou des valeurs absolues différentes.

On notera que, à amplitudes égales et à fréquences de répétition égales du mouvement de va-et-vient, les vitesses maximales $V_1$ et $V_2$ et les gradients de vitesse maximaux $G_1$ et $G_2$ sont nettement plus élevés dans le procédé de la présente invention que dans les machines connues. Comme on le verra plus loin, ceci favorise le détachement des raisins par grappes entières.

Les expérimentations effectuées par les demanderesses ont montré que l'on obtenait de bons résultats pour la récolte du raisin en adoptant les valeurs suivantes :

a) course totale des organes secoueurs : environ 100 mm ;

b) fréquence de répétition du mouvement de va-et-vient : environ 4 Hz ;

c) durée de chacune des deux phases III et VII, c'est-à-dire durée des temps d'arrêt des organes secoueurs à chaque fin de course : environ 100 ms ;

d) vitesses $V_1$ et $V_2$ pendant les phases I, V et IX environ 5 m/s ;

e) gradients de vitesse $G_1$ et $G_2$ pendant les phases II, IV, VI et VIII : environ 1 000 m/s².

Avec les valeurs indiquées ci-dessus, environ 60 à 80 % de la récolte de raisin était constituée par des grappes entières. Naturellement, les valeurs indiquées plus haut varient selon le type de fruits à récolter (raisin, cassis, groseilles, etc...), selon la variété de fruits (c'est-à-dire selon les différents cépages pour la vigne), selon le mode de conduite de la plante (pour la vigne, par exemple palissée, en cordons, en gobelets, etc...), où selon d'autres facteurs encore. Dans le cas de la vigne, les expérimentations effectuées par les demanderesses ont montré que l'on pouvait obtenir de bons résultats du point de vue du décrochement des raisins par grappes entières, lorsque la fréquence de répétition du mouvement de va-et-vient des organes secoueurs est comprise entre 2 et 10 Hz, l'amplitude de la course totale du mouvement de va-et-vient est comprise entre 50 et 150 mm, le temps d'arrêt des organes secoueurs à chaque fin de course est compris entre 40 et 250 ms, la vitesse de déplacement des organes secoueurs est comprise entre 3 et 8 m/s, et le gradient de vitesse des organes secoueurs est compris entre 250 et 1 500 m/s².

On notera que le diagramme de mouvement A des organes secoueurs a approximativement une forme d'onde rectangulaire. Il existe divers dispositifs d'actionnement du type hydraulique, électromagnétique ou purement mécanique permettant d'obtenir un mouvement de ce genre. Toutefois, une solution commode, qui a été expérimentée par les demanderesses, consiste à utiliser des vérins hydrauliques à double effet pour actionner les organes secoueurs.

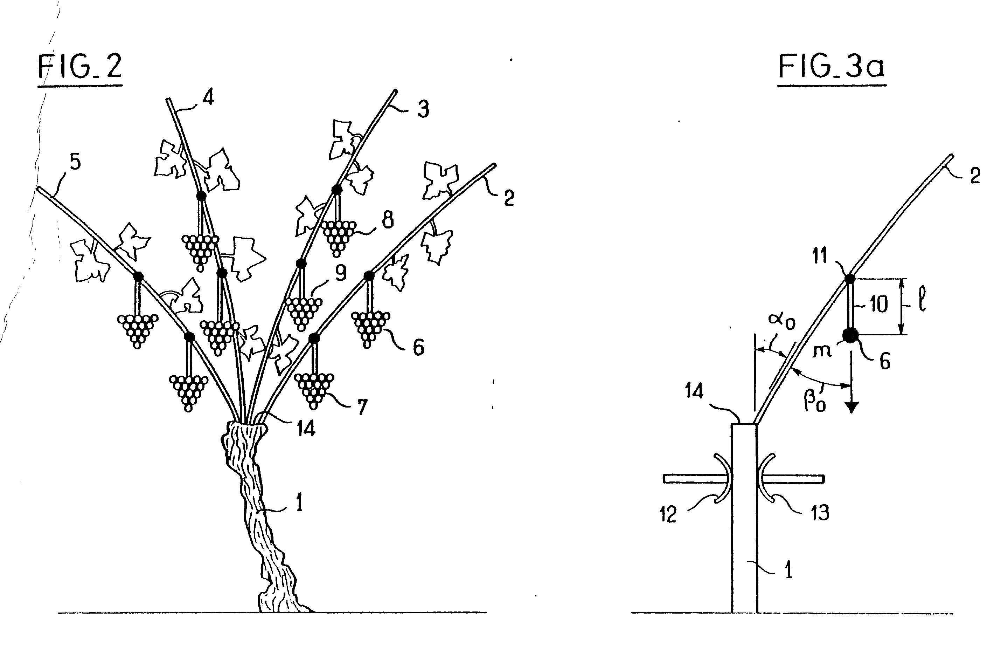

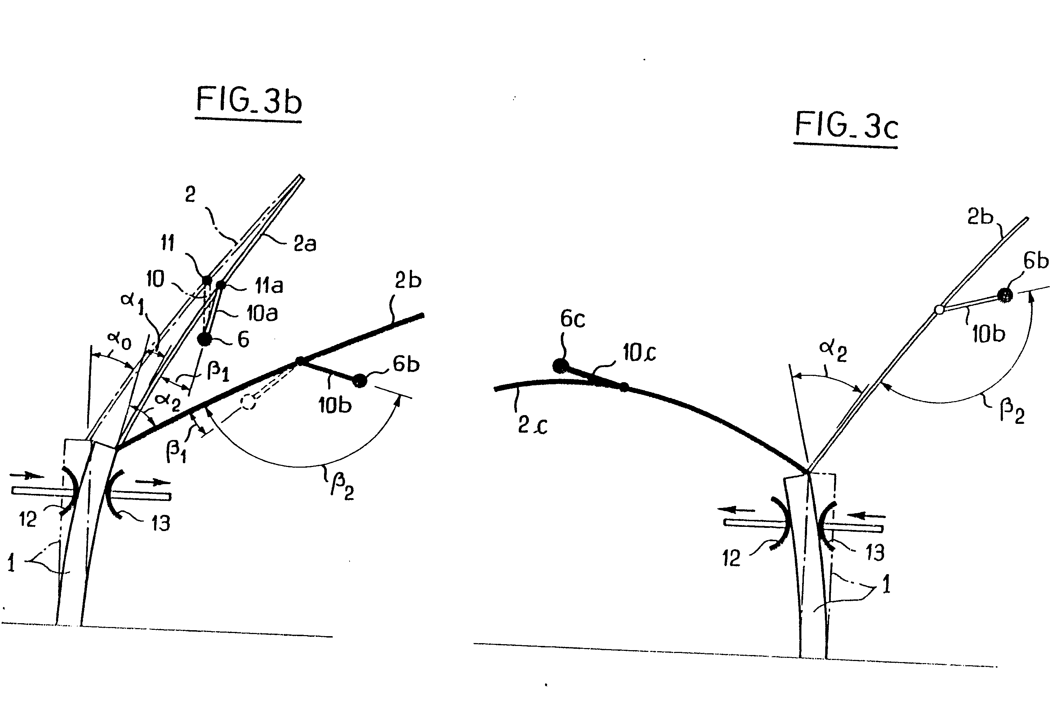

On décrira maintenant comment les grappes de raisin sont détachées des rameaux ou sarments de vigne. La figure 2 montre une vigne du type gobelet, qui comprend un pied ou cep 1 et un certain nombre de sarments ou rameaux 2, 3, 4 et 5 qui portent des grappes 6, 7, 8, 9, ... Pour simplifier la démonstration qui va suivre, on supposera que la vigne ne comporte qu'un seul sarment 2 et une seule grappe 6 (figure 3a). On supposera en outre que le pied 1, qui est encastré à sa base dans le sol, a une raideur $R_1$ dans le sens transversal (résistance à la flexion), que le sarment 2 qui est encastré à sa partie inférieure dans le pied 1, a une raideur $R_2$ dans le sens transversal plus faible que celle du pied 1 et forme avec celui-ci un angle $\alpha_0$ lorsque la vigne est dans sa position de repos, et que la grappe 6 a une masse m concentrée en un point à l'extrémité d'un pendule 10 de longueur 1, qui est fixé en un point 11 au sarment 2 et qui forme avec celui-ci un angle $\beta_0$. On supposera en outre que les organes secoueurs 12 et 13 sont disposés de manière à agir sur le pied 1 de la vigne dans la partie supérieure de celui-ci, mais en dessous de la couronne 14 (figures 2 et 3a), donc en dessous de la zone fructifère de la vigne.

Sous l'effet d'un déplacement horizontal rapide des organes secoueurs 12 et 13 (phase I de la figure 1) vers la droite par exemple, le pied 1 de la vigne se déforme comme une poutre élastique encastrée dans le sol, comme montré dans la figure 3b. Du fait de la faible raideur $R_2$ du sarment 2, celui-ci ne peut pas communiquer instantanément un mouvement à la masse m de la grappe 6. Cette dernière reste donc approximativement à son emplacement précédent d'équilibre. A ce moment, le sarment 2 est dans la position 2a et fait avec le pied 1 un angle $\alpha_1$ inférieur à $\alpha_0$, et le pendule 10 qui est maintenant dans la position 10a fait avec le sarment 2a un angle $\beta_1$ inférieur à l'angle $\beta_0$. Le pendule 10 ayant perdu sa position d'équilibre du fait du déplacement de son point de fixation 11 en 11a, va alors commencer un mouvement de rotation dans le sens antihoraire, d'où il en résulte une augmentation de l'angle $\beta_1$. Pendant le même temps, la raideur $R_2$ du sarment 2 va provoquer une rotation de celui-ci par fléchissement vers le côté droit de telle façon que l'angle $\alpha_1$ reprenne sa valeur d'équilibre $\alpha_0$ qu'il dépassera pendant la phase III de la figure 1, après la phase II de décélération brutale, à cause de l'énergie cinétique accumulée par le sarment 2 et par la grappe 6. Les deux mouvements combinés du sarment 2 d'une part et du pendule 10 d'autre part aboutissent à une position extrême droite dans laquelle le sarment occupe une position 2b et fait avec le pied 1 un angle $\alpha_2$ supérieur à $\alpha_0$, et dans laquelle le pendule occupe une position 10b et fait avec le sarment 2b un angle $\beta_2$ supérieur à $\beta_0$, du fait de l'énergie cinétique accumulée par le sarment et par la grappe pendant leur mouvement de la position 2a à la position 2b et de la position 10a à la position 10b, respectivement, et du fait de la décélération brutale et du temps d'arrêt en fin de course des organes secoueurs 12 et 13 (phases II et III de la figure 1). Le sarment et le pendule occupent respectivement les positions 2b et 10b à la fin de la phase III de la figure 1. Dans ces positions, la raideur générale du système sous l'effet d'une sollicitation horizontale est maximale car le sarment et le pendule sont presque horizontaux. Si à ce moment précis ($t_3$) on provoque un déplacement rapide (phase IV et V de la figure 1) des organes secoueurs 12 et 13 vers la gauche depuis la position qu'ils occupent dans la figure 3b pendant la phase III vers la position représentée dans la figure 3c et correspondant à la phase VII de la figure 1, l'accélération des organes secoueurs 12 et 13 va être instantanément et pratiquement intégralement transmise à la masse m de la grappe 6 du fait de la raideur horizontale du système. Le pendule 10, c'est-à-dire la tige de la grappe 6 va donc être soumise à une force de traction importante qui provoquera sa rupture si cette force est supérieure à la force d'abscission de la tige de la grappe. Si la rupture de la tige de la grappe ne se produit pas à ce moment, l'ensemble du pied 1, du sarment 2 et du pendule 10 va commencer à se déplacer vers la gauche sous l'effet du déplacement rapide des organes secoueurs 12 et 13. Au cours de ce déplacement, le pied 1 va passer de la position représentée sur la figure 3b à la position représentée sur la figure 3c, et le sarment 2 et la grappe 6 vont se déplacer vers la gauche en acquérant une grande énergie cinétique due à la grande vitesse du déplacement. Sous l'effet de l'énergie cinétique acquise par le sarment et par la grappe, ceux-ci vont arriver dans une position extrême gauche comme montré en 2c et 6c dans la figure 3c. Dans cette position, le sarment 2 et le pendule 10 sont presque horizontaux et ont donc une bonne raideur dans le sens horizontal. A ce moment, les organes secoueurs 12 et 13 sont déjà arrêtés car leur vitesse de déplacement est plus rapide que celle de la végétation. Dans la position extrême gauche du sarment et de la grappe, la décélération peut être supérieure à l'accélération à laquelle ils avaient été soumis au cours de la phase IV de la figure 1, étant donné qu'il s'agit d'un freinage et qu'il suffit d'absorber l'énergie des masses en mouvement. En conséquence, dans la position 10c, la tige de la grappe est soumise à une force de traction supérieure à celle à laquelle elle était soumise dans la position 10b et sa rupture se produira si elle ne s'était pas déjà produite dans la position 10b. Si la rupture de la tige de la grappe ne s'est toujours pas produite dans la position 10c, on notera qu'immédiatement après la fin de la phase VII de la figure 1 (instant $t_7$), alors que le sarment et la grappe occupent encore approximativement la position extrême gauche représentée sur la figure 3c, les organes secoueurs 12 et 13 sont déplacés rapidement vers la droite (phases VIII et IX de la figure 1) et la tige de la grappe sera encore soumise à une forte accélération, donc à une force de traction importante susceptible de provoquer sa rupture pendant qu'elle est encore dans la position 10c, puis à nouveau à une forte décélération, donc encore à une force de traction importante susceptible de provoquer sa rupture si elle ne s'était pas déjà produite, lorsque le sarment et la grappe arrivent à nouveau dans la position extrême droite représentée sur la figure 3b.

Dans le cas où les tiges des grappes de raisin sont particulièrement solides, quelques allers et retours des organes secoueurs peuvent s'avérer nécessaires pour obtenir le détachement des grappes. Néanmoins, les expérimentations effectuées par les demanderesses ont montré que le procédé de la présente invention permettait de détacher la majorité des grappes en un ou deux allers et retours des organes secoueurs.

En résumé, on notera que le mouvement des organes secoueurs est un mouvement de va-et-vient discontinu avec des déplacements rapides et des temps d'arrêts. Il faut toujours démarrer le mouvement des organes secoueurs, après un temps d'arrêt, lorsque la raideur horizontale des sarments et des tiges des grappes est maximale.

La durée du temps d'arrêt des organes secoueurs est capitale pour donner aux sarments et aux tiges des grappes suffisamment de temps pour pouvoir prendre une position horizontale dans l'une ou l'autre ou dans les deux positions extrêmes des organes secoueurs, et pour que les tiges des grappes soient soumises à une forte accélération ou décélération horizontale lorsque les tiges des grappes sont elles-mêmes dans une position horizontale. La valeur de l'accélération ou de la décélération est aussi capitale pour provoquer une rupture franche des tiges des grappes à l'une ou l'autre des deux extrémités de la course des organes secoueurs. La valeur de la vitesse des organes secoueurs est aussi capitale pour communiquer à l'ensemble du système une grande énergie cinétique et, ainsi, pour favoriser la rupture des tiges des grappes à l'une ou l'autre des deux extrémités de la course des organes secoueurs. On notera que le procédé de la présente invention permet de communiquer aux grappes de raisin une forte accélération et/ou décélération à l'une ou aux deux extrémités de la course des organes secoueurs, et que cette accélération et/ou décélération est apte à provoquer le détachement de grappes entières, par rupture de leur tige, en un temps très court, éliminant ainsi les phénomènes de fatigue qui, dans les machines antérieurement connues, étaient propices au détachement des grains individuels de raisin.

Il va de soi que le mode de réalisation de la présente invention qui a été décrit ci-dessus a été donné d'exemple purement indicatif et nullement limitatif, et que de nombreuses modifications peuvent être facilement apportées par l'homme de l'art sans pour autant sortir du cadre de la présente invention, telle que définie dans les revendications.

**Revendications**

1. Procédé pour la récolte des fruits, baies et similaires, en particulier pour la récolte du raisin par grappes entières, consistant à secouer la plante (1) à l'aide d'organes secoueurs (12, 13) enserrant la plante et animés d'un mouvement de va-et-vient entre deux positions extrêmes de part et d'autre d'une position moyenne, en faisant subir aux organes secoueurs (12 et 13), au cours de leur déplacement au moins d'un côté de leur position moyenne, une succession de phases de mouvement, au cours de l'une desquelles le gradient de vitesse atteint une valeur maximale, caractérisé en ce que ladite succession de phases comprend une phase de mouvement (I, V, IX) à grande vitesse ($V_1$ ou $V_2$), pendant laquelle la vitesse ($V_1$ ou $V_2$) est sensiblement constante et au moins égale à 2 m/s, une phase de mouvement (III, VII) à vitesse quasiment nulle, qui correspond en pratique à un temps d'arrêt des organes secoueurs dans l'une au moins de leurs deux positions extrêmes et qui a une durée ($t_3$-$t_2$, $t_7$-$t_6$) au moins égale à 30 ms, et, entre les deux phases précédentes, une phase intermédiaire de mouvement (II, IV, VI, VIII) à gradient élevé de vitesse ($G_1$ ou $G_2$) dans laquelle le gradient de vitesse ($G_1$ ou $G_2$) a ladite valeur maximale et est au moins égal à 200 m/s².

2. Procédé selon la revendication 1, caractérisé en ce que la phase intermédiaire (IV, VIII) est une phase d'accélération qui précède la phase à grande vitesse (V, IX).

3. Procédé selon la revendication 1, caractérisé en ce que la phase (I, V) à grande vitesse précède la phase intermédiaire (II, VI) qui est une phase de décélération.

4. Procédé selon la revendication 1, caractérisé en ce que ladite succession de phases de mouvement comprend, dans l'ordre, une phase (I) à grande vitesse, une phase de décélération (II) à gradient élevé de vitesse, une phase (III) à vitesse quasiment nulle dans ladite position extrême, une phase d'accélération (IV) à gradient élevé de vitesse et une phase (V) à grande vitesse.

5. Procédé selon l'une quelconque des revendications 1 à 4, caractérisé en ce que ladite succession de phases se produit des deux côtés de la position moyenne des organes secoueurs (12 et 13).

6. Procédé selon l'une quelconque des revendications 1 à 5, caractérisé en ce que la vitesse ($V_1$ ou $V_2$) dans la phase (I, V, IX) à grande vitesse est comprise entre 3 et 8 m/s, le gradient de vitesse ($G_1$ ou $G_2$) dans ladite phase intermédiaire (II, IV, VI, VIII) est compris entre 250 et 1 500 m/s², et la durée ($t_3$-$t_2$, $t_7$-$t_6$) de la phase (III, VII) à vitesse quasiment nulle est comprise entre 40 et 250 ms.

7. Procédé selon la revendication 6, caractérisé en ce que la vitesse ($V_1$ ou $V_2$) dans la phase (I, V, IX) à grande vitesse est égale à environ 5 m/s, le gradient de vitesse ($G_1$ ou $G_2$) dans la phase intermédiaire (II, IV, VI, VIII) est égal à environ 1 000 m/s², et la durée ($t_3$-$t_2$, $t_7$-$t_6$) de la phase (III, VII) à vitesse quasiment nulle est égale à environ 100 ms.

8. Procédé selon l'une quelconque des revendications 1 à 7, caractérisé en ce qu'il consiste à faire agir les organes secoueurs (12 et 13) uniquement sur les troncs (1) des plantes.

## Claims

1. A process for harvesting fruit, berries or the like, more particularly for harvesting grapes in whole bunches, residing in shaking the plant (1) by means of shaking elements (12, 13) which engage around the plant and reciprocate between two end positions on either side of a central position, the shaking elements (12, 13) experiencing in their movement on at least one side of their central position a sequence of movement phases in one of which the speed gradient reaches a peak value, characterised in that the sequence of movement phases comprises a movement phase (I, V, IX) at high speed ($V_1$ or $V_2$) in which the speed ($V_1$ or $V_2$) is substantially constant and at least equal to 2 m/s, a movement phase (III, VII) at substantially zero speed and corresponding in practice to a pause of the shaking elements in at least one of their two end positions and having a duration ($t_3$-$t_{12}$, $t_7$-$t_6$) of at least 30 ms and between the two previous phases an intermediate movement phase (II, IV, VI, VIII) with a high speed gradient ($G_1$ or $G_2$) in which the speed gradient ($G_1$ or $G_2$) has the peak value and is at least 200 m/s².

2. A process according to claim 1, characterised in that the intermediate phase (IV, VIII) is an acceleration phase which precedes the high-speed phase (V, IX).

3. A process according to claim 1, characterised in that the high-speed phase (I, V) precedes the intermediate phase (II, VI) which is a deceleration phase.

4. A process according to claim 1, characterised in that the sequence of movement phases comprises in order a high-speed phase (I), a deceleration phase with a high speed gradient, a substantially zero speed phase (III) in the end position, an acceleration phase (IV) with a high speed gradient and a high speed phase (V).

5. A process according to any of claims 1-4, characterised in that the sequence of phases occurs on both sides of the central position of the shaking elements (12, 13).

6. A process according to any of claims 1-5, characterised in that the speed ($V_1$ or $V_2$) in the high-speed phase (I, V, IX) is between 3 and 8 m/s, the speed gradient ($G_1$ or $G_2$) in the intermediate phase (II, IV, VI, VIII) is between 250 and 1 500 m/s² and the duration ($t_3$-$t_2$, $t_7$-$t_6$) of the substantially zero speed phase (III, VII) is between 40 and 250 ms.

7. A process according to claim 6, characterised in that the speed ($V_1$ or $V_2$) in the high-speed phase (I, V, IX) is approximately 5 m/s, the speed gradient ($G_1$ or $G_2$) in the intermediate phase (II, IV, VI, VIII) is approximately 1 000 m/s² and the duration ($t_3$-$t_2$, $t_7$-$t_6$) of the substantially zero speed phase (III, VII) is approximately 100 ms.

8. A process according to any of claims 1-7, characterised in that it resides in causing the shaking elements (12, 13) to act only on the plant stems.

## Patentansprüche

1. Verfahren zum Ernten von Früchten, Beerenobst und ähnlichem, insbesondere zum Ernten von Beeren in vollständigen Trauben, darin bestehend, daß die Pflanze (1) mit Hilfe von Rüttelorganen (12, 13), die zwischen sich die Pflanze einklemmen und zwischen zwei Endlagen beidseits einer Mittellage hin- und hergehend angetrieben werden, gerüttelt wird, wobei den Rüttelorganen (12 und 13) im Verlauf ihrer Verschiebung zumindest auf einer Seite ihrer Mittellage eine Abfolge von Bewegungsphasen aufgeprägt wird, im Verlaufe einer derselben der Geschwindigkeitsgradient einen Maximalwert erreicht, dadurch gekennzeichnet, daß die Abfolge von Phasen eine Bewegungsphase (I, V, IX) großer Geschwindig-

keit ($V_1$ oder $V_2$) umfaßt, während derer die Geschwindigkeit ($V_1$ oder $V_2$) etwa konstant und mindestens gleich 2m/s ist, sowie eine Bewegungsphase (III, V) mit einer Geschwindigkeit praktisch gleich Null, die in der Praxis einer Stillstandszeit der Rüttelorgane in mindestens einer ihrer zwei Endlagen entspricht und eine Dauer von mindestens gleich 30 ms hat und eine Bewegungszwischenphase (II, IV, VI, VIII) mit hohem Geschwindigkeitsgradienten ($G_1$ oder $G_2$), während derer der Geschwindigkeitsgradient ($G_1$ oder $G_2$) den genannten Maximalwert hat und mindestens gleich 200 m/s² beträgt.

2. Verfahren nach Anspruch 1, dadurch gekennzeichnet, daß die Zwischenphase (IV, VIII) eine Beschleunigungsphase ist, die der Phase hoher Geschwindigkeit (V, IX) vorangeht.

3. Verfahren nach Anspruch 1, dadurch gekennzeichnet, daß die Phase (I, V) großer Geschwindigkeit der Zwischenphase (II, VI) vorangeht, die eine Verzögerungsphase ist.

4. Verfahren nach Anspruch 1, dadurch gekennzeichnet, daß die genannte Abfolge der Bewegungsphasen nacheinander eine Phase (I) hoher Geschwindigkeit, eine Verzögerungsphase (II) mit hohem Geschwindigkeitsgradienten, eine Phase (III) mit der Geschwindigkeit praktisch gleich Null in der genannten Endlage, eine Beschleunigungsphase (IV) mit hohem Geschwindigkeitsgradienten und eine Phase (V) hoher Geschwindigkeit umfaßt.

5. Verfahren nach einem der Ansprüche 1 bis 4, dadurch gekennzeichnet, daß die genannte Abfolge der Phasen zu beiden Seiten der Mittellage der Rüttelorgane (12 und 13) stattfindet.

6. Verfahren nach einem der Ansprüche 1 bis 5, dadurch gekennzeichnet, daß die Geschwindigkeit ($V_1$ oder $V_2$) in der Phase (I, V, IX) hoher Geschwindigkeit zwischen 3 und 8 m/s liegt, daß der Geschwindigkeitsgradient ($G_1$ oder $G_2$) in der genannten Zwischenphase (II, IV, VI, VIII) zwischen 250 und 1 500 m/s² liegt, und daß die Dauer ($t_3$-$t_2$, $t_7$-$t_6$) der Phase (III, VII) mit der Geschwindigkeit praktisch gleich Null zwischen 40 und 250 ms liegt.

7. Verfahren nach Anspruch 6, dadurch gekennzeichnet, daß die Geschwindigkeit ($V_1$ oder $V_2$) in der Phase (I, V, IX) hoher Geschwindigkeit etwa gleich 5 m/s ist, daß der Geschwindigkeitsgradient ($G_1$ oder $G_2$) in der Zwischenphase (II, IV, VI, VIII) gleich etwa 1 000 m/s² ist, und daß die Dauer ($t_3$-$t_2$, $t_7$-$t_6$) der Phase (III, VII) mit der Geschwindigkeit praktisch gleich Null ungefähr gleich 100 ms ist.

8. Verfahren nach einem der Ansprüche 1 bis 7, dadurch gekennzeichnet, daß es darin besteht, die Rüttelorgane (12 und 13) ausschließlich auf die Stämme (1) der Pflanzen einwirken zu lassen.

EP 0 200 631 B1

FIG_1

# FIG. 2

# FIG. 3a

EP 0 200 631 B1

FIG.3c

FIG.3b